# EUROPEAN PATENT APPLICATION

(11) **EP 3 879 319 A1**
(43) Date of publication of application: **15.09.2021**
(21) Application number: 20305426.7
(22) Date of filing: 04.05.2020
(51) Int. Cl.: G02B 6/38

(54) **UNIFIED COPPER AND FIBER CONNECTOR FOR HYBRID ELECTRIC/OPTICAL CABLE**

(30) Priority: 12.03.2020 US 202016816531
(71) Applicant: Berk-Tek LLC, New Holland, PA 17557 (US)
(72) Inventor: GOOD, Paul Michael, NEW HOLLAND, PA Pennsylvania 17557 (US); SCHUMACHER, Matthew, MILLERSVILLE, PA Pennsylvania 17551-1418 (US)
(74) Representative: Ipsilon

(57) **Abstract**

The invention concerns a composite cable connector for terminating a cable segment having at least one fiber optic element and at least one conductor element comprising: a connector housing receiving at a first end, said at least one fiber optic element and at least one conductor element, a ferrule at a second end of said connector housing for presenting said at least one fiber optic element; at least one crimp on element, positioned at a back end of said connector housing for crimping onto said connector housing and coupling with said at least one conductor element; and at least one conductive pathway, from said crimp on element to a front end of said connector housing, proximate said ferrule, presenting at least one conductive pathway at a front face of said connector housing.

## Description

### FIELD OF THE INVENTION -

The present arrangement is directed to a cable connector. More particularly, the present arrangement is directed to a cable connector for a hybrid fiber/copper communication cable.

### DESCRIPTION OF THE RELATED ART -

A technology trend known generally as Internet of Things (IoT) is exponentially increasing the number of IP-based devices connected to Ethernet networks. Many of these IP-based devices are more than 100 meters away from the network closet and therefore out of the reach of standards-based powering solutions such as what is commonly referred to as Power over Ethernet (PoE) and technically defined in the IEEE 802.3bt ("bt") standard. The bt standard defines four power system types; Type 1, Type 2, Type 3 and Type 4. These types provide 12.95 W, 25.5 W, 51 W and 71 W to end devices respectively. Each type also has a myriad of defined characteristics including voltages, currents, resistance values, etc... The standard also defines certain characteristics of the equipment that provides power (Power Sourcing Equipment (PSE)), the equipment that uses power (Powered Device (PD)) and the cabling between the aforementioned devices.

All of these systems are designed to work using category cabling at lengths of 100 m or less. This is due to the fact that the data being transmitted across the cabling at the same time as the power was designed to function at a maximum distance of 100 m.

One solution is to provide remote PSE that is powered and receives its data from a composite cable that contains both fiber optic elements and metallic conductors. If this cable is of the low voltage type, meaning that it does not need an electrician for installation, it can significantly decrease the cost of an installation. By taking advantage of the long data transmission capabilities of fiber optics and metallic conductors larger than those found in traditional category cables, the total distance between the PD and the rest of the network can be extended far beyond 100 m, to distances on the order of kilometers.

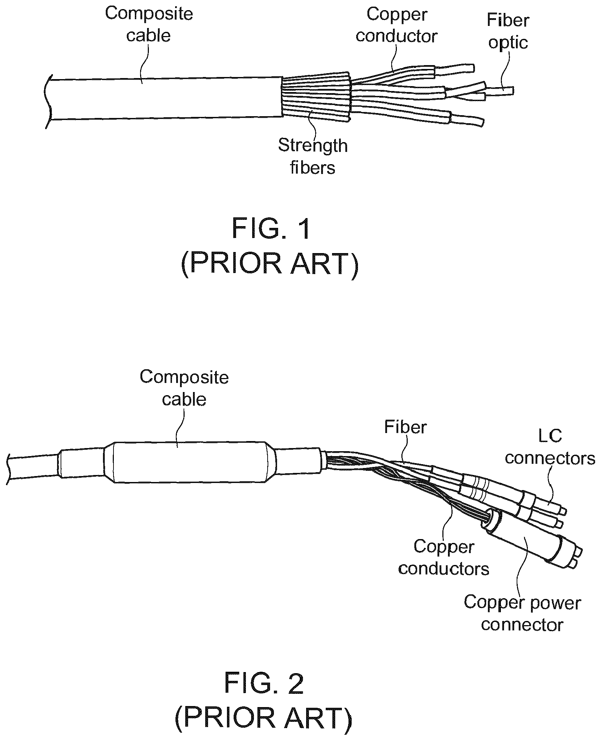

Prior art Figure 1 shows a typical composite cable containing one or more fiber strands and some number of copper conductors under one jacket. This type of composite cable can be used to deliver power to a remote location via the copper conductors and data using the fiber strands. Prior art Figure 2 shows a connectorized version of a composite cable with two LC connectors on the fibers and a copper power connector on the copper conductor.

### OBJECTS AND SUMMARY-

The present arrangement overcomes the drawbacks associated with the prior art and provides a connector for a hybrid copper/fiber cable that maintains a more traditional fiber connector assembly, but modifies it in such a manner to allow for a copper/power/electrical connection therethrough. Such an arrangement allows for power and optical signals to be passed through a single connector and equipment adapter.

Such an arrangement with one connector simplifies installer requirements, as only one connector type is required on a job site. Such a connector would decrease the physical space occupied by all the connectors on the device (no media conversion to RJ45 needed), as there would be no need, for example, to find a specialized copper connector that will securely connect to their equipment like fiber connectors do.

The present arrangement helps eliminate the need for multiple types of power connectors between powered devices. For example, screw-down terminals for power, that can have issues where the conductors slip out of its cage can be avoided. In the present arrangement the crimp-down nature of the connection between the conductor and the connector ensures that the copper conductor does not prevent power from going to the remote device.

This connector also solves the issue of needing a media converter as required for most remote devices (as they typically need a RJ45 connector)

To this end a composite cable connector for terminating a cable segment having at least one fiber optic element and at least one conductor element is provided. The composite cable connector has a connector housing, receiving at a first end, the at least one fiber optic element and at least one conductor element. A ferrule at a second end of the connector housing presents the at least one fiber optic element.

At least one crimp on element is positioned at a back end of the connector housing for crimping onto the connector housing and couples with the at least one conductor element. At least one conductive pathway, from the crimp on element to a front end of the connector housing, proximate the ferrule, presenting at least one conductive pathway at a front face of the connector housing.

### BRIEF DESCRIPTION OF THE DRAWINGS -

The present invention can be best understood through the following description and accompanying drawing, wherein:
Figure 1 is a prior art images of a hybrid fiber/copper cable;
Figure 2 is a prior art image of a fiber optic connector (LC type);
Figure 3 shows a hybrid fiber optic/power connector in accordance with one embodiment;
Figure 4 is an adapter for connecting two hybrid fiber optic/power connector of Figure 3 in accordance with one embodiment;
Figure 5 shows the adapter of Figure 4 connected to a front end of the hybrid fiber optic/power connector of Figure 3, in accordance with one embodiment; and
Figure 6 is a front view of the hybrid fiber optic/power connector of Figure 3 in accordance with one embodiment.

### DETAILED DESCRIPTION -

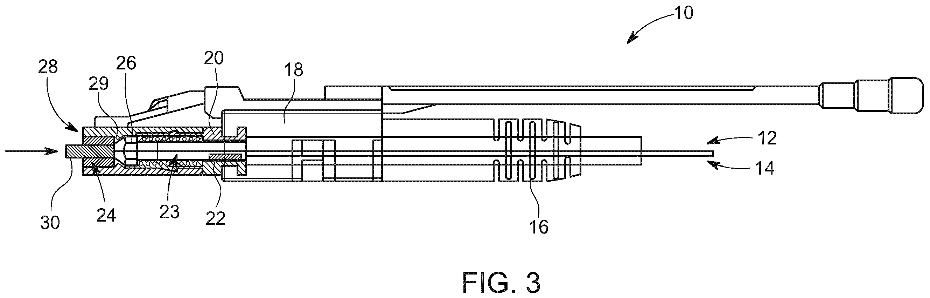

In one embodiment as shown in Figure 3 connector 10 is shown supporting connectivity of both a fiber optic element as well as a copper wire. For the purposes of illustration, the basic structure of an LC (Lucent Connector) is used, however, this is not intended to limit the scope of the present invention. It is contemplated that the basic structure could be based on other fiber optic connectors such as FC (Fiberoptic Connector) or SC (Subscriber Connector).

As shown in Figure 3, connector 10 supports an optical fiber 12 and a copper conductor wire 14 (e.g. 12-18 AWG copper), both of which pass through a strain relief 16 into a connector body 18.

Fiber 12 enters a connector housing 20 and passes through to the front of ferrule 30. However, unlike typical connector housings, connector housing 20 includes a crimp on element 22 made of metal for supporting connection with conductor wire 14.

From there, conductive crimp on element 22 is electrically/conductively connected to conductive pathway that will terminate at the front of either connector housing 20 and/or ferrule 30. In one embodiment, the crimp and crimp on element 22 is a mechanical splice point to the copper conductor, and can be made from metal, such as copper. In one example, crimp on element 22 may be constructed large enough to contain a 12 to 18 AWG conductor. Using mechanical leverage, connector 22 is deformed around conductor 14, mechanically bonding itself to copper conductor 14.

For example, as shown in Figure 3, in one embodiment, a copper sleeve 24 can pass over ferrule 30 for power conduction, interfacing with an existing conductive pathway 23 in connector housing 20. As the conductive path 23 which ends in ferrule holder 26 contacts element 22, it would allow the terminated conductor wire 14 to be electrically connected all the way to the front face of connector 10. Elements 23, 24, 28, and 30 could be made of a conductive ceramic instead of copper.

In another embodiment, crimp on element 22 may be in contact with a copper front element 28 (surrounding sleeve 24 and ferrule 30) that passes over connector body 20 from the rear to the front face of connector 10. This embodiment would include an additional copper filled cavity 29 between the ferrule sleeve and full front element 28 of connector 10 to ensure full conductivity and connection for conductor wire 14.

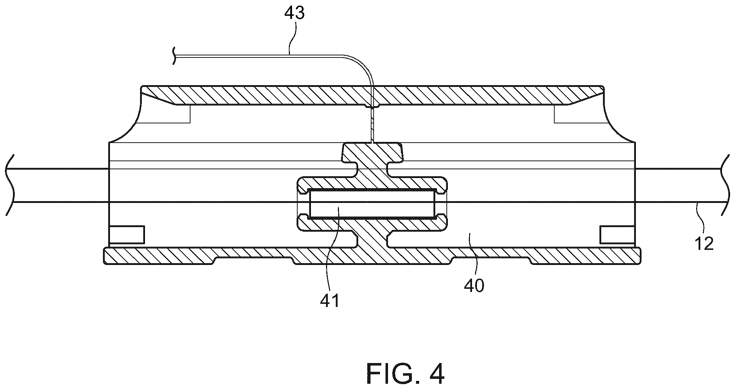

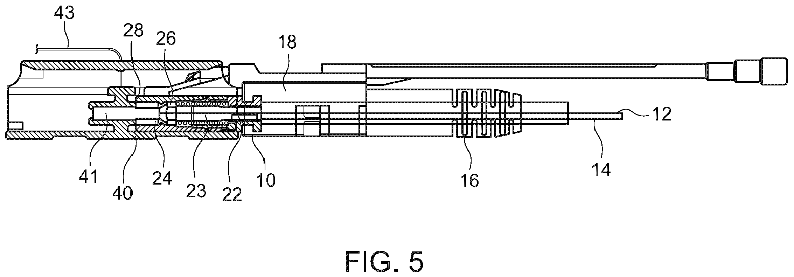

When placing two connectors 10 together, a standard connector block (e.g. LC connector block) may be used. This will rely on ferrules 30 to provide the electrical connection. As shown in Figure 4 and 5 an alternative connector block 40 maintains a conductive sleeve 41. Sleeve 41 provides both fiber alignment of 12 and further copper conductivity. This provides would also allow for the connection of a standard, non-conductive connector to connector 10. A copper conductor wire 43, connected to the conductive sleeve 41, can be used to either connect to PDs that are not compatible with connector 10 or to power supplies at the PSE end in order to inject power into the system. Such an arrangement with block 40, sleeve 41, and conductor 43 would allow for power injection, or extraction, at the level of connector block 40 between adjacent fiber optic cabling segments using such connector 10 and a standard connector.

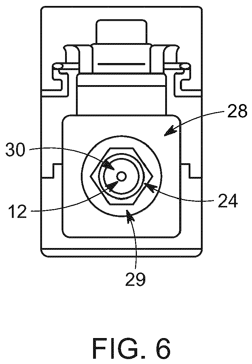

It is understood that either one of or both copper front element 28 and or metal sleeve 24/ferrule 30, can be used as the electrical pathway from conductor 14 to the front of connector 10. Figure 6 shows a front view of connector 10 exhibiting the embodiments enabling full electrical connection of conductor 14 at the front face, including ferrule 30.

## Claims

1. A composite cable connector for terminating a cable segment having at least one fiber optic element and at least one conductor element comprising:
a connector housing receiving at a first end, said at least one fiber optic element and at least one conductor element,
a ferrule at a second end of said connector housing for presenting said at least one fiber optic element;
at least one crimp on element, positioned at a back end of said connector housing for crimping onto said connector housing and coupling with said at least one conductor element; and
at least one conductive pathway, from said crimp on element to a front end of said connector housing, proximate said ferrule, presenting at least one conductive pathway at a front face of said connector housing.

2. The composite cable connector as claimed in claim 1, wherein said connector housing is any one of an LC connector, an SC connector, and a FC connector.

3. The composite cable connector as claimed in claim 1, wherein said crimp on element is electrically/conductively connected to a conductive pathway in said connector housing.

4. The composite cable connector as claimed in claim 3, wherein said crimp on element is electrically/conductively connected to a copper sleeve over said ferrule, via said conductive pathway in said connector housing.

5. The composite cable connector as claimed in claim 1, wherein said crimp on element is electrically/conductively connected to said front face of said connector housing via a conductive front element, surrounding said ferrule and passing over said connector housing to said crimp on element.

6. The composite cable connector as claimed in claim 1, wherein said connector is configured to be inserted into an adapter for electrical connection to an adjoining segment of a conductive pathway.

7. The composite cable connector as claimed in claim 1, wherein said adapter includes a conductive sleeve providing an electrical conductive pathway between said connector and an adjacent conductor in said adapter.

8. The composite cable connector as claimed in claim 7, wherein said adapter includes a metal conductor for connection between an external power source and said conductive sleeve, so as to introduce or extract an electrical current to a conductive pathway where said connector is connected to said adapter.
